# EUROPEAN PATENT SPECIFICATION

(11) **EP 3 508 771 B1**
(45) Date of publication and mention of the grant of the patent: **16.03.2022**
(21) Application number: 17846715.5
(22) Date of filing: 01.09.2017
(51) Int. Cl.: F16L 59/065, F16L 59/07, F16L 59/08

(54) **VACUUM INSULATION PANEL**
VAKUUMISOLIERPLATTE
PANNEAU D'ISOLATION SOUS VIDE

(30) Priority: 02.09.2016 JP 2016171878; 02.09.2016 JP 2016171879; 02.09.2016 JP 2016171880
(43) Date of publication of application: 10.07.2019
(73) Proprietor: NIPPON STEEL CORPORATION, Chiyoda-ku Tokyo 100-8071 (JP); Mag-Isover K.K., Tokyo 102-0083 (JP)
(72) Inventor: AZUMA Tsutomu, Tokyo 100-8366 (JP); MISHIMA Hirohisa, Tokyo 100-8366 (JP); NAKAKO Takefumi, Tokyo 100-8366 (JP); KUBONIWA Seiichi, Tokyo 102-0083 (JP)
(74) Representative: Saint-Gobain Recherche
(86) International application number: PCT/JP2017/031619
(87) International publication number: WO 2018/043712

(56) References cited:
- EP-A1- 1 892 452
- WO-A1-2016/006186
- JP-A- 2002 363 754
- JP-A- 2011 174 524
- JP-A- 2015 158 261
- JP-A- 2016 517 944
- JP-A- 2017 053 400
- JP-A- 2017 053 400
- US-A1- 2012 285 971

## Description

### TECHNICAL FIELD

The present invention relates to a vacuum insulation panel used to insulate heat from walls, ceilings and floors of a construction such as a house; a vacuum insulation panel for heat insulation of a car interior, an engine room interior or the like; and a vacuum insulation panel for use in a heat exchanger such as a beverage vending machine, a refrigerator or a water heater, and an electric appliance such as an electric pot or a copier.

### BACKGROUND ART

In recent years, from importance of suppressing warming-up that is a global environmental problem, energy-saving is desired, and energy saving measures for various apparatuses are being forwarded. Regarding constructions such as houses or the like, in order to suppress an electric quantity being consumed, in particular, in order to suppress an electric quantity of air conditioners, it has been attempted to improve heat insulation properties of an inner space and thereby to improve also heat insulation properties for blocking heat intrusion from the outside. That is, it is necessary to improve the heat insulation properties of members used in the walls, the ceilings, and the floors of constructions.

As for cars, technologies have been developed to shift the drive source from gasoline to electricity and improve the energy use efficiency. Energy use efficiency has been improved in gasoline cars as well as electric cars, in which improvement of thermal efficiency has most intensely been pursued. Specifically, the foregoing improves air conditioning efficiency in a car interior, and combustion efficiency when starting an engine. In order to achieve the foregoing, heat transfer needs to be minimized between the inside such as a car interior or engine room and the outside; in other words, heat insulation properties need to be improved, whereby the heat shielding properties for shielding heat entering from outside can be improved as well.

As for a heat exchanger such as a beverage vending machine, a refrigerator, a cooling vessel for car, or a water heater, and a thermal device such as an electric pot, attempts to curb power consumption have been made by improving heat insulation properties of an inner space, thereby improving heat shielding properties for shielding heat entering from outside.

As means for improving the heat insulation properties, the following Patent Literature 1, EP1892452, US2012285971 or JP2011174524 to use a vacuum insulation panel. First, the vacuum insulation panel disclosed in Patent Literature 1 is fixed to a roof panel, a roof rail or the like of a vehicle, forms a vacuum state by housing a nonwoven fabric in the inside of a case of a laminated material, and is closely sealed by heat-sealing.

Further, an example of the vacuum insulation panel is disclosed in Patent Literature 2. The vacuum insulation panel disclosed in Patent Literature 2 is produced in such a manner that a core material made of inorganic fibers are housed together with a gas absorbent in a case made of a gas barrier film, the inside of the case is vacuum suctioned, and an opening part is sealed by heat-sealing a film.
Patent Document 1: Japanese Unexamined Patent Application, Publication No. 2008-012957
Patent Document 2: Japanese Unexamined Patent Application, Publication No. 2004-308691

### DISCLOSURE OF THE INVENTION

### Problems to be Solved by the Invention

The vacuum insulation panels disclosed in Patent Literature 1 and Patent Literature 2 adopt heat-sealing as a sealing method of an opening part. Therefore, there is a problem that water infiltrates from the sealing part to degrade a degree of vacuum to increase thermal conductivity. In particular, constructions have many chances of contacting with water during a long period of time due to outdoor environments. Thus, a back side that does not face an inner space of the wall, the ceiling or the floor becomes a wet environment to be abundant of infiltration of water. Therefore, as the time goes, a pressure in the inside of the vacuum insulation panel increases.

Cars run and are stored outdoors and therefore have frequent contact with water, which in turn causes exterior parts such as a roof panel or an engine room interior to be exposed to a wet environment, and water to frequently permeate. Other parts are also exposed to a similar environment. For example, a fuel cell system or a battery system is installed under the car floor or inside the car trunk, and heat insulation properties are required of the wall surrounding the system so as to improve operational efficiency or to shield peripheral parts from heat; however, even when using the vacuum insulation panel, the surrounding wall will inevitably be exposed to a wet environment. As a result, the pressure inside the vacuum insulation panel will increase as time passes.

In particular, vending machines or the like under an outdoor environment have frequent contact with water for a long period of time, which in turn causes the periphery of the vacuum insulation panel to be exposed to a wet environment, and water to frequently permeate. As a result, the degree of vacuum will decrease as time passes.

Further, since the vacuum insulation panel of Patent Literature 2 encapsulates a gas absorbent together with a core material in an outer packaging material, water infiltrated to the inside from a sealing part is absorbed by the gas absorbent, and therefore, for a certain period of time, the degree of vacuum may be suppressed from degrading. However, because there is a limit of an absorption amount of the gas absorbent, after a certain period of time, the degree of vacuum degrades to result in an increase of thermal conductivity.

The present invention was created in view of these situations, and intends to provide a vacuum insulation panel capable of maintaining excellent heat insulation properties close to the heat insulation properties immediately after the manufacture over a long period of time by suppressing an increase in the thermal conductivity for a definite period from immediately after the manufacture of the vacuum insulation panel.

### Means for Solving the Problems

A vacuum insulation panel of the present invention is a vacuum insulation panel in which a core material made of inorganic fibers are wrapped with an outer packaging material made of a stainless steel plate, and an inner space of the outer packaging material wrapping the core material is in a vacuum state,
wherein a water content of the core material is 0.05 wt% or less,
the surface roughness Ra of the inner space-side surface of the outer packaging material is 0.2 µm or less, and a peripheral part of the outer packaging material is sealed by welding in a state in which the pressure of the inner space of the outer packaging material is 1 Pa or less.

Since the outer packaging material is sealed by welding, the water may be suppressed from infiltrating, and this also enables the suppression of changes over time in the performance degradation of the vacuum insulation panel.

A manufacturing method of a vacuum insulation panel of the present invention includes, by assuming to manufacture a vacuum insulation panel in which a core material made of inorganic fibers are wrapped with a stainless steel plate outer packaging material, and an inner space of the outer packaging material that wraps the core material is made a vacuum state, a step of heating the core material to make the water content contained in the core material 0.05% by weight or less, a step of wrapping the core material with the outer packaging material, and a step of sealing by welding an opening part of the outer packaging material with a pressure of the inner space of the outer packaging material that wraps the core material maintained at 1 Pa or less.

### Effects of the Invention

According to the vacuum insulation panel of the present invention, the possibility of being able to maintain excellent heat insulation properties close to the heat insulation properties immediately after the manufacture over a long period of time is heightened.

### BRIEF DESCRIPTION OF THE DRAWINGS

FIG.1 is an exploded diagram of a vacuum insulation panel.
FIG. 2A is a diagram that shows an outline of a manufacturing process of the vacuum insulation panel.
FIG. 2B is a diagram that shows an outline of a manufacturing process of the vacuum insulation panel.
FIG.3 is a graph that shows temporal changes of the thermal conductivities of vacuum insulation panels, each of which uses a core material having a different water quantity.

### PREFERRED MODE FOR CARRYING OUT THE INVENTION

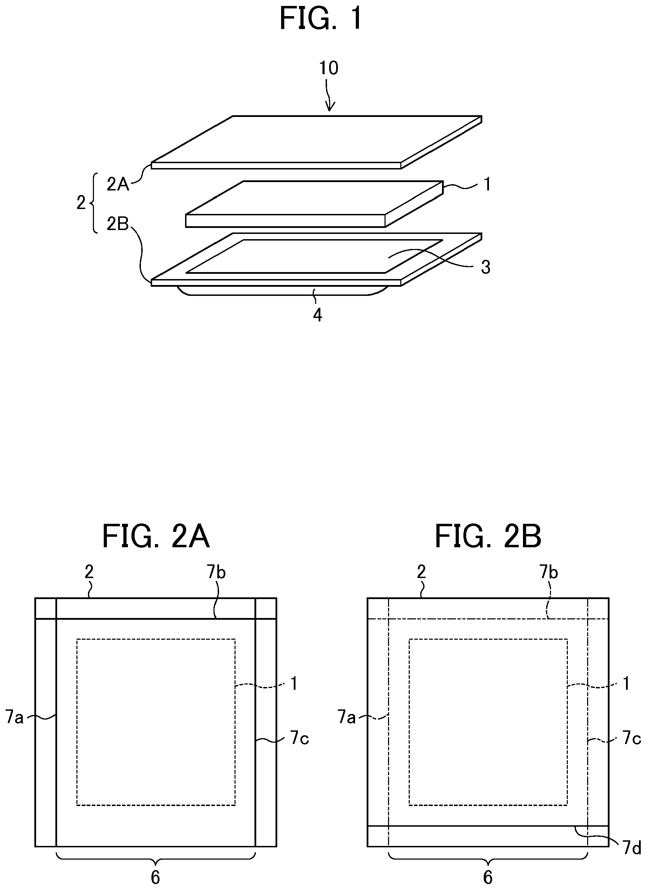

In what follows, an embodiment of a vacuum insulation panel will be described. In a vacuum insulation panel manufactured by a manufacturing method according to the present embodiment, as shown for example in FIG. 1, a core material 1 is wrapped with a stainless steel plate outer packaging material 2, and an inner space 3 of the outer packaging material 2 that wraps the core material 1 is made a vacuum state.

The core material 1 supports the outer packaging material 2 from the inside such that the outer packaging material 2 of a vacuum insulation panel 10 completed by manufacturing may not be collapsed by atmospheric pressure. As the core material 1, inorganic fibers are used. Examples of the inorganic fiber include glass wool, ceramic fiber or the like. The core material 1 is desirably completely free of all binders. This is because when the core material containing a binder is used, an outgas is generated from the core material as time goes by, and this may temporally degrade the heat insulation properties.

The outer packaging material 2 is made of two outer packaging plates 2A and 2B. As these outer packaging plates 2A and 2B, stainless steel thin plates are used. The two outer packaging plates 2A and 2B coincide in shape and size in terms of their peripheral parts. At least one outer packaging plate 2B is provided with a bulged part 4, and when the peripheral parts of the two outer packaging plates 2A and 2B are aligned and superposed, between a recess side surface of the bulged part 4 of the one outer packaging plate 2B and the other outer packaging plate 2A, an inner space 3 is formed. The surface roughness Ra of a surface of the outer packaging plate on the inside of the inner space 3 formed by the outer packaging plates 2A and 2B is 0.2 µm or less, and the core material 1 is housed in the inner space 3. The two outer packaging plates 2A and 2B illustrated in the drawing have a rectangular shape when seen from a thickness direction. The reason why the surface roughness Ra of a surface that is an inner space 3 side of the outer packaging material 2 is regulated relates to the water that is absorbed by the surface on the inner space 3 side of the outer packaging material 2. That is, the larger the surface roughness Ra of the surface is, the larger is an actual surface area than an apparent surface area, so as the surface roughness of a surface on the inner space 3 side of the outer packaging material 2 becomes larger, the water content entrapped in the inner space of the vacuum insulation panel 10 increases. The reason why the surface roughness Ra is set to 0.2 µm or less will be described below.

The vacuum insulation panel 10 in the present embodiment is manufactured mainly by a step of removing water that the core material 1 contains, a step of wrapping the core material 1 with the outer packaging material 2, and a step of welding the outer packaging material 2.

In the step of removing the water, by heating the core material 1, the water contained in the core material 1 is removed until a quantity of the water becomes 0.05% by weight or less (preferably 0.02% by weight or less). The reason why the quantity of water of the core material 1 is removed to 0.05% by weight (preferably 0.02% by weight or less) will be detailed below.

In the step of wrapping the core material, after the quantity of water contained by the core material 1 becomes the above value or less and the temperature of the core material 1 decreases to a predetermined temperature, the core material 1 is housed on a recess side of the bulged part 4 of the outer packaging plate 2B, and peripheral parts of the two outer packaging plates 2A and 2B are aligned and superposed. Thus, the core material 1 is wrapped with the outer packaging plates 2.

The step of welding will be described with reference to FIG. 2. The step of welding is divided into a first welding step where an opening part 6 is provided to a part of a peripheral part of the outer packaging material 2 and a second welding step that is performed in vacuum and seals the opening part provided in the first welding step while maintaining the inner space 3 in a state of vacuum. The first welding step may be performed in the atmosphere.

Examples of the welding method include well-known welding methods such as a seam welding method, an arc welding method, a laser welding method, and an electron beam welding method. However, in the case where the outer packaging plates 2A and 2B are thin stainless steel plates, the seam welding method is preferably used. This is because, since the outer packaging plates 2A and 2B are formed of a thin stainless steel plate, when the bulged part is formed by drawing, wrinkles may be generated in a peripheral part, and when the peripheral parts having wrinkles are welded, a welding defect is likely to be generated in a gap of two outer packaging plates 2A and 2B. As the welding defect, burn-through or the like may be cited. Therefore, it is preferable to weld without gap while collapsing the wrinkles by using the seam welding method in which the outer packaging plates 2A and 2B may be welded by pressurizing from above and below.

Here, with reference to FIG. 2, a procedure for performing the first welding step and the second welding step by using the seam welding method will be described. FIG. 2(a) is a diagram for explaining the first welding step. The core material 1 is housed on the recess side of the bulged part 4 of the outer packaging plate 2B, and to a peripheral part in a state where the peripheral parts of the two outer packaging plates 2A and 2B are aligned and superposed, while pressurizing in a plate thickness direction of the outer packaging plate by seam welding, each of three sides (7a, 7b, 7c) of the peripheral parts of four sides of the outer packaging plates 2 is linearly seam welded to seal. As a result, one side of the peripheral part remains as the opening part 6. The first welding step may be performed in the atmosphere.

The second welding step is necessary to be performed in vacuum. This is because the inner space 3 is evacuated via the opening part 6 to obtain a vacuum state of a pressure of 1 Pa or less. There, by preparing an apparatus in which a seam welding machine is installed in a vacuum chamber, and applying seam welding in vacuum to the opening part 6 in the apparatus to form a sealed part 7d, a vacuum insulation panel of the present invention may be manufactured.

### <Reason why the quantity of water contained in the core material is set to 0.05% by weight or less>

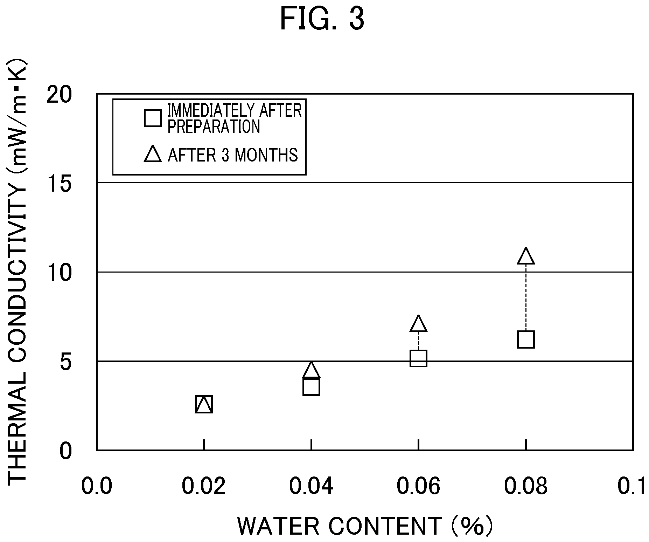

Next, the reason why the quantity of water contained in the core material 1 is set to 0.05% by weight or less will be described. FIG. 3 shows a result of an investigation on when what degree of the quantity of water contained in the core material 1 is removed, whether a certain degree of the heat insulation properties may be maintained. This drawing shows the results when several vacuum insulation panels were prepared by using respectively the core materials 1 made of several glass wools having different quantities of contained water, and when the thermal conductivities immediately after preparation and the thermal conductivities after 3 months, where the temporal change of the thermal conductivity substantially stops, were investigated. When the thermal conductivity of 5 mW/m·K that is an average level of the thermal conductivity immediately after the manufacture of a high performance vacuum insulation material generally used in the world is assumed as an upper limit, it is apparent from the results of this investigation that the vacuum insulation panel having the quantity of water contained in the core material 1 of about 0.05% by weight is the one that satisfies the above thermal conductivity. The quantity of water contained in the core material 1 was measured using the Coulometric Karl Fischer water titrator manufactured by Kyoto Electronics Manufacturing Co., Ltd.

From these investigation results, it can be confirmed that when the quantity of water contained in the core material 1 made of glass wool is removed to 0.02% by weight, a vacuum insulation panel 10 that may maintain excellent heat insulation properties for a long period of time can be manufactured. Further, although there is a certain degree of change over time in the thermal conductivity, it is found that, as the quantity of water contained in the core material 1 with a thermal conductivity that can be expected to be finally 5 mW/m·K or less, 0.05% by weight is the upper limit. From this, in the present embodiment, the quantity of water contained in the core material 1 was set to 0.05% by weight or less (preferably 0.02% by weight or less).

### EXAMPLES

### (Example 1)

In what follows, a specific Example of a vacuum insulation panel 10 will be described. For outer packaging plates 2A and 2B that constitute an outer packaging material 2 that wraps a core material 1, stainless foil (SUS304) having a dimension of 220 mm × 220 mm × thickness 100 µm was used. As the stainless foil (SUS304), 5 kinds respectively having the surface roughness Ra of 0.05 µm, 0.10 µm, 0.20 µm, 0.30 µm, and 0.40 µm were prepared. Further, one outer packaging plate 2B was provided with a bulged part 4 of 190 mm × 190 mm × height 5.0 mm by a drawing process of press molding.

Further, as the core material 1, glass wool of about 1200 g/m² was used. Then, this glass wool was inserted in advance into an electric furnace under an atmospheric environment to perform a heating step at a temperature of 200°C for 3 hours, followed by taking it out of the furnace, further followed by rapidly transferring it into a desiccator of room temperature (20°C) and relative humidity of 30% to perform a cooling step by holding for 30 minutes. The conditions of the heating step and the cooling step are conditions determined by performing a preliminary experiment such that the quantity of water contained in the core material 1 becomes 0.03 to 0.04% by weight.

Thereafter, the core material 1 after the cooling step was taken out of the desiccator, and the outer packaging plate 2A, the core material 1, and the outer packaging plate 2B were overlapped in this order. At this time, the core material 1 was housed so as to be filled with no gaps in the inside of the bulged part 4 provided to the outer packaging plate 2B. Then, a peripheral part of the outer packaging plate 2A and a peripheral part of the outer packaging plate 2B were bonded by welding while pressurizing by seam welding in the atmosphere. The seam welding was applied in such a manner that the seam welding was divided into three times along outer peripheries of three sides of the rectangular outer packaging plates 2A and 2B, each was welded linearly, and the remaining one side was left as an opening part.

A seam welder used was a single phase AC type, an upper electrode had a disc shape having a diameter of 100 mm and a thickness of 4 mm, and a curvature of an apex of the electrode was set to 20R. A lower electrode had a block shape having a thickness of 4 mm. Both the upper electrode and the lower electrode were made of chromium copper. Welding conditions were set so that applied pressure: 150 N, welding speed: 1 m/minute, welding current: 1.6 kA, and an on-off ratio of energizing time: 3 ms/2 ms.

Next, an object to be welded of which three sides were welded and a seam welder were brought into a vacuum chamber, the vacuum chamber was connected to a vacuum pump and vacuum-evacuated until a pressure in the inner space of the outer packaging plates 2A and 2B became 1 Pa or less, followed by sealing by welding the opening part as it is in the vacuum.

As a performance evaluation of the manufactured vacuum insulation panel, the thermal conductivity was evaluated. A temporal change of the thermal conductivity was measured under the following environment. First, the thermal conductivity of the vacuum insulation panel immediately after the manufacture was measured, followed by subjecting the vacuum insulation panel to an environmental load test where both a high temperature environment and a low temperature environment were repeated. In more detail, a temperature cycle was formed by holding the vacuum insulation panel under a temperature environment of 80°C for 12 hours, followed by holding under a temperature environment of -15°C for 12 hours, further followed by alternately repeating these temperature environments every 12 hours. At the time point of 60 days after the start of the environmental load test, the vacuum insulation panel was taken out, followed by measuring the thermal conductivity. After the measurement of the thermal conductivity, once more, the above environmental load test was continued. Also thereafter, for every 60 days passed, the vacuum insulation panel was similarly taken out, followed by measuring the thermal conductivity, and further followed by continuing the environmental load test.

The thermal conductivity was evaluated by measuring the thermal conductivities of several vacuum insulation panels having stainless foil with different surface roughnesses Ra under a condition where an average temperature of a center part of the vacuum insulation panel becomes 25°C using the thermal conductivity meter HC-074/200 manufactured by EKO Instruments Co., Ltd. In more detail, by measuring an average value of three vacuum insulation panels having stainless foil with the same surface roughness Ra, the thermal conductivity for each surface roughness Ra of the stainless foil was obtained.

In Table 1, measurement results of the thermal conductivities at the time points of every 60 days of the environmental load test from immediately after the manufacture of the vacuum insulation panel are shown.

**[Table 1]**

| No. | Surface roughness Ra (µm) | Thermal conductivity(mW/m·K) | | | | Increase rate of thermal conductivity after 180 days (%) |
|---|---|---|---|---|---|---|
| | | Immediately after manufacture | After 60 days | After 120 days | After 180 days | |
| A | 0.05 | 2.3 | 2.6 | 2.6 | 2.6 | 13% |
| B | 0.12 | 2.5 | 2.9 | 3.0 | 3.0 | 20% |
| C | 0.19 | 2.8 | 3.5 | 3.5 | 3.6 | 29% |
| D | 0.31 | 3.3 | 5.1 | 5.2 | 5.4 | 64% |
| E | 0.39 | 3.8 | 5.4 | 5.5 | 5.8 | 53% |

From this Table 1, it is obvious that the smaller the surface roughness Ra of the stainless steel plate used for the outer packaging material is, the smaller is an increase in the thermal conductivity after passage of days from immediately after the manufacture. In particular, the vacuum insulation panel having the smallest surface roughness Ra of 0.05 µm of the stainless steel plate (one that is denoted by No. A in Table 1) does hardly show an increase in the thermal conductivity after 180 days compared with the thermal conductivity immediately after the manufacture and was found to be a very excellent vacuum insulation panel from the viewpoint of degradation of heat insulation properties.

Although the vacuum insulation panels other than the vacuum insulation panel having the smallest surface roughness Ra of 0.05 µm of the stainless steel plate (one denoted by No. A in Table 1) each showed an increase in the thermal conductivity between from immediately after the manufacture to 180 days, all of the vacuum insulation panels showed an increase in the thermal conductivity during to 60 days from immediately after the manufacture, and the change thereafter is small and the thermal conductivity is stable. This is because until after 60 days from immediately after the manufacture, a large part of the water carried in by absorption on a surface of the stainless steel plate used in the outer packaging material is released in the inner space of the vacuum insulation panel by becoming gas molecules due to a temperature increase of the vacuum insulation panel.

Further, after 60 days from immediately after the manufacture, an increase in the thermal conductivity is very small. This is found that because the vacuum insulation panel of the present invention was bonded not by using heat-sealing for bonding peripheral parts of the outer packaging materials 2A and 2B but by using seam welding, the water did not infiltrate into the inside of the vacuum insulation panel from the peripheral part. That is, a weld structure is effective for maintaining the heat insulation properties of the vacuum insulation panel over a long period of time.

Further, from results shown in Table 1, when considering the point that the change in thermal conductivity is small, as the surface roughness Ra of a surface on the inner space 3 side of the outer packaging material 2, to be 0.2 µm or less becomes an index.

### INDUSTRIAL APPLICABILITY

The vacuum insulation panel manufactured by performing the present invention can be preferably used in heat insulation of walls, ceilings, and floors of a construction such as a house or the like, can be preferably used in heat insulation of a car interior, an engine room interior or the like, and can be preferably used for a heat exchanger such as a beverage vending machine, a refrigerator or a water heater, and an electric appliance such as an electric pot or a copier.

### EXPLANATION OF REFERENCE NUMERALS

- 1: Core material
- 2: Outer packaging material
- 3: Inner space
- 4: Bulged part
- 6: Opening part
- 10: Vacuum insulation panel

## Claims

1. A vacuum insulation panel for a construction, a car or an electric appliance comprising:
a vacuum insulation panel in which a core material made of inorganic fibers is wrapped with an outer packaging material made of a stainless steel plate, and an inner space of the outer packaging material wrapping the core material is in a vacuum state,
wherein a water content of the core material is 0.05 wt% or less,
the surface roughness Ra of the inner space-side surface of the outer packaging material is 0.2 µm or less,
and a peripheral part of the outer packaging material is sealed by welding in a state in which the pressure of the inner space of the outer packaging material is 1 Pa or less.

2. The vacuum insulation panel as claimed in claim 1, wherein the inorganic fibers are glass wool or ceramic fibers.

3. The vacuum insulation panel as claimed in claim 1 or 2, wherein the water content of the core material is 0.02 wt% or less.

## Patentansprüche

1. Vakuumisolierplatte für eine Konstruktion, ein Auto oder ein elektrisches Gerät, umfassend:
eine Vakuumisolierplatte, in der ein Kernmaterial aus anorganischen Fasern mit einem äußeren Verpackungsmaterial aus einer Edelstahlplatte umhüllt ist, und ein Innenraum des äußeren Verpackungsmaterials, der das Kernmaterial umhüllt, in einem Vakuumzustand ist,
wobei ein Wassergehalt des Kernmaterials 0,05 Gew.-% oder weniger beträgt,
die Oberflächenrauheit Ra der innenraumseitigen Oberfläche des äußeren Verpackungsmaterials 0,2 µm oder weniger beträgt,
und ein peripherer Teil des äußeren Verpackungsmaterials durch Schweißen in einem Zustand versiegelt wird, in dem der Druck des Innenraums des äußeren Verpackungsmaterials 1 Pa oder weniger beträgt.

2. Vakuumisolierplatte nach Anspruch 1, wobei die anorganischen Fasern Glaswolle oder Keramikfasern sind.

3. Vakuumisolierplatte nach Anspruch 1 oder 2, wobei der Wassergehalt des Kernmaterials 0,02 Gew.-% oder weniger beträgt.

## Revendications

1. Panneau d'isolation sous vide pour une construction, une voiture ou un appareil électrique comprenant :
un panneau d'isolation sous vide dans lequel un matériau de noyau constitué de fibres inorganiques est enveloppé avec un matériau d'emballage externe constitué d'une plaque en acier inoxydable, et un espace interne du matériau d'emballage externe enveloppant le matériau de noyau est dans un état de vide,
dans lequel une teneur en eau du matériau de noyau est de 0,05 % en poids ou moins,
la rugosité de surface Ra de la surface côté espace interne du matériau d'emballage externe est de 0,2 µm ou moins,
et une partie périphérique du matériau d'emballage externe est scellée par soudage dans un état dans lequel la pression de l'espace interne du matériau d'emballage externe est de 1 Pa ou moins.

2. Panneau isolant sous vide selon la revendication 1, dans lequel les fibres inorganiques sont des fibres de laine de verre ou de céramique.

3. Panneau d'isolation sous vide selon la revendication 1 ou 2, dans lequel la teneur en eau du matériau de noyau est de 0,02 % en poids ou moins.
